# EUROPÄISCHE PATENTSCHRIFT

(11) **EP 4 018 600 B1**
(45) Veröffentlichungstag und Bekanntmachung des Hinweises auf die Patenterteilung: **28.02.2024**
(21) Anmeldenummer: 20750589.2
(22) Anmeldetag: 01.07.2020
(51) Int. Cl.: H04L 12/40

(54) **VERFAHREN ZUR POSITIONSERKENNUNG EINES BUSTEILNEHMERS**
METHOD FOR RECOGNISING THE POSITION OF A BUS SUBSCRIBER
PROCÉDÉ DE RECONNAISSANCE DE LA POSITION D'UN ABONNÉ AU BUS

(30) Priorität: 20.08.2019 DE 102019212415
(43) Veröffentlichungstag der Anmeldung: 29.06.2022
(73) Patentinhaber: Continental Autonomous Mobility Germany GmbH, 85057 Ingolstadt (DE)
(72) Erfinder: SÄTTELE, Peter, 90411 Nürnberg (DE)
(74) Vertreter: Continental Corporation
(86) Internationale Anmeldenummer: PCT/DE2020/200053
(87) Internationale Veröffentlichungsnummer: WO 2021/032254

(56) Entgegenhaltungen:
- WO-A1-2016/184889
- DE-A1-102016 212 645
- DE-A1-102017 208 831
- DE-C1- 10 048 745

## Beschreibung

Die vorliegende Erfindung betrifft Verfahren zur Positionserkennung eines Busteilnehmers bzw. von Busteilnehmern und ein Bussystem, bei welchem die Positionserkennung des Busteilnehmers bzw. der Busteilnehmer anhand eines erfindungsgemäßen Verfahrens erfolgt.

### Technologischer Hintergrund

Moderne Fortbewegungsmittel wie Kraftfahrzeuge oder Motorräder werden zunehmend mit Fahrerassistenzsystemen ausgerüstet, welche mit Hilfe von Sensorsystemen die Umgebung erfassen, Verkehrssituation erkennen und den Fahrer unterstützen, z. B. durch einen Brems- oder Lenkeingriff oder durch die Ausgabe einer optischen oder akustischen Warnung. Als Sensorsysteme zur Umgebungserfassung werden regelmäßig Ultraschallsensoren, Kamerasensoren, Surroundview-Kameras, Radarsensoren, Lidarsensoren oder dergleichen eingesetzt. Aus den durch die Sensoren ermittelten Sensordaten können anschließend Rückschlüsse auf die Umgebung gezogen werden, durch die Assistenzfunktionen zur Fahrerunterstützung bei Park- und/oder Fahrmanövern realisiert werden können.

Die Sensoren werden in der Regel über einen Bus bzw. ein Bussystem als Busteilnehmer an eine Steuervorrichtung oder eine Steuereinheit bzw. ein Steuergerät (Electronic Control Unit, ECU) angeschlossen, wobei unter einem Bus ein System zur Datenübertragung zwischen mehreren (Bus-) Teilnehmern über einen insbesondere gemeinsamen Übertragungsweg zu verstehen ist. Ferner ist beim Einbau bzw. der Installation der Busteilnehmer, z. B. mehrere Ultraschallsensoren oder Surroundview-Kameras, die Kenntnis der jeweiligen Busteilnehmer- bzw. Einbauposition für die gewünschte Assistenzfunktion von besonderer Bedeutung. Dementsprechend ist es notwendig, zu wissen, welcher Sensor an welcher Position im Fahrzeug angeordnet bzw. eingebaut ist. Die Erkennung oder Bestimmung der jeweiligen Einbauposition kann z. B. dadurch erfolgen, dass eine explizite Konfiguration (z. B. durch End-of-Line Programmierung, "DIP-Switches", etc.) erfolgt oder ein "Einlernen" durchgeführt wird (z. B. durch manuelles oder automatisiertes Aktivieren eines identifizierbaren Merkmales am Busteilnehmer, wobei dieses zu einem Zeitpunkt immer nur für einen Teilnehmer aktiviert sein darf). Die Explizite Konfiguration bzw. das Einlernen erfordern jedoch zusätzliche Konfigurationsschritte bei der Installation der Sensoren (im Fahrzeugbau typischerweise am Bandende oder im Servicefall), welche in der Regel nicht automatisch durch das System durchgeführt werden können. Daher ist diese Art der Positionserkennung nicht prozesssicher und bedeutet zusätzlichen Zeit- und Kostenaufwand. Ferner können schaltungstechnische Maßnahmen vorgenommen werden, wie die Codierung der Teilnehmerposition durch zusätzliche Adressinformationen am Einbauort (z. B. durch zusätzliche, nach Position unterschiedlich codierte Adresspins im Anschlussstecker) oder durch die Verdrahtung der Busleitung mit einer sogenannten "Daisy Chain", d. h. die Verbindung zum nachgelagerten Bussegment wird durch die Busteilnehmerschaltung "durchgeschleift" und kann durch die Schaltung des Busteilnehmers aktiv unterbrochen werden. Jedoch erfordert eine derartige Codierung durch die Anschlusskonfiguration einen zusätzlichen Aufwand an der Eingangsbeschaltung der Busteilnehmer. Zudem erfordert die unterschiedliche Beschaltung der Bus-Steckverbinder für die einzelnen Busteilnehmer einen erhöhten Fertigungsaufwand und ist zudem eine zusätzliche Fehlerquelle.

### Druckschriftlicher Stand der Technik

Aus dem Stand der Technik sind Drei-Draht Busse (Power, Bus, Ground) bzw. Bussysteme bekannt, bei denen es z. B. möglich ist, die Codierung durch eine Anschlusskonfiguration vorzunehmen. Beispielsweise ist aus der WO 2017/064280 A1 eine Autodetektionsvorrichtung zur Detektion eines Busteilnehmers bzw. Sensors innerhalb eines elektronischen Sensorsystems bekannt, wobei es sich bei dem Sensorsystem um ein Parksensorsystem mit Ultraschallsensoren handeln kann. Dabei können durch zyklisches Vertauschen der Anschlüsse am jeweiligen Busteilnehmer bis zu 6 unterschiedliche Konfigurationen unterstützt und erkannt werden.

Ferner ist aus der DE 100 48 745 C1 ein Verfahren zur Ermittlung der Netztopologie eines Bussystems mit einer Anzahl von Busteilnehmern, die an untereinander verbundenen Bussegmente einer Busleitung angeordnet sind, bekannt. Hierbei wird zunächst jedem Busteilnehmer ein initiierendes Messtelegramm von einer Messeinrichtung gesendet, welches von den Busteilnehmern mit einem Antworttelegramm beantwortet wird. Anschließend sendet der Diagnoserepeater ein Messsignal an den jeweils antwortenden Busteilnehmer, das von diesem reflektiert wird. Aus der Zeitspanne zwischen dem Senden des Messsignals und dem Eintreffen des Reflexionssignals wird dann vom Diagnoserepeater die Entfernung des antwortenden Busteilnehmers zum Diagnoserepeater bestimmt.

### Aufgabe der vorliegenden Erfindung

Die Aufgabe der vorliegenden Erfindung besteht darin, ein Verfahren sowie eine Vorrichtung zur Positionserkennung der Busteilnehmer eines Bussystems zur Verfügung zu stellen, durch das die Positionserkennung in einfacher und kostengünstiger Weise ohne zusätzlichen Bauteilaufwand verbessert und die Nachteile aus dem Stand der Technik überwunden werden können.

### Lösung der Aufgabe

Die vorstehende Aufgabe wird durch die gesamte Lehre der Ansprüche 1 und 13 sowie der nebengeordneten Ansprüche gelöst. Zweckmäßige Ausgestaltungen der Erfindung sind in den Unteransprüchen beansprucht.

Bei dem erfindungsgemäßen Verfahren zur Positionserkennung eines Busteilnehmers eines Bussystems, ist mindestens eine Steuervorrichtung und mehrere Busteilnehmer vorgesehen. Die Busteilnehmer sind jeweils an einer zu erkennenden Position angeordnet und über mindestens eine Leitung mit der Steuervorrichtung verbunden, insbesondere eine Leitung zur Daten-, Signal-, Energie- und/oder Nachrichtenübertragung. Die Leitung zu dem jeweiligen Busteilnehmer weist dabei eine festlegbare Leitungslänge auf. Die Positionserkennung des jeweiligen Busteilnehmers erfolgt dann, indem die Steuervorrichtung ein Signal bzw. einen Impuls über die Leitung an den jeweiligen Busteilnehmer sendet, und der Busteilnehmer mit einem Antwortpuls, Antwortsignal oder dergleichen antwortet. Dabei kann die Steuervorrichtung eine Laufzeit des Signals ermitteln, z. B. innerhalb der das Signal gesendet wird und der Busteilnehmer antwortet. Diese Laufzeit kann dann ins Verhältnis zur Leitungslänge gesetzt werden, so dass das Verhältnis von Laufzeit und Leitungslänge zur Positionserkennung herangezogen werden kann. Beispielsweise indem eine bestimmte Laufzeitdauer einer bestimmten Leitungslänge entspricht. Durch das erfindungsgemäße Verfahren wird somit eine neuartige, autonome Positionsermittlung für Busteilnehmer an einem insbesondere geteilten Bussystem ("shared medium") zur Verfügung gestellt, welche ohne manuelle Eingriffe oder zusätzliche Pins am Sensor oder eine aufwändige Beschaltung im Sensor realisiert werden kann. Dementsprechend wird nur ein geringer Hardwareaufwand benötigt, der z. B. in Sensor-/ECU-ASICs realisierbar ist. Zudem wird eine einfache Art der Busverdrahtung von Sensoren ermöglicht, wodurch Einzelleitungen vom Sensor zum Steuergerät hin eingespart werden können, wodurch wiederum ein wirtschaftlicher Vorteil beim Fahrzeugaufbau entsteht. Zudem können kleinere Steuergerätestecker (z. B. bei 12 Ultraschallsensoren 6 Leitungen statt 16 Leitungen) ermöglicht werden. Ferner ist die Anzahl an zu vermessenden Busteilnehmern nicht beschränkt.

Gemäß einer bevorzugten Ausgestaltung der vorliegenden Erfindung kann es sich bei dem Busteilnehmer um einen Sensor handeln, insbesondere um einen Ultraschallsensor. Beispielsweise können mehrere Ultraschallsensoren als Abstandssensoren in einem Fahrzeug eingesetzt werden, um einen Parkassistenten zu realisieren. Die Ultraschallsensoren werden hierbei verteilt im/am Fahrzeug angeordnet, um eine "Rundumsicht" zu gewährleisten. Über die verschiedenen Leitungslängen hin zu einer zentralen Steuervorrichtung (wie z. B. Electronic Control Unit ECU oder Automated Driving Control Unit ADCU) können dann die jeweiligen Einbaupositionen mittels des erfindungsgemäßen Verfahrens automatisch erkannt werden. Die Installation der Ultraschallsensoren wird dadurch erheblich vereinfacht, da diese beim Einbau nicht weiter gekennzeichnet werden müssen und sich das System im Nachhinein selbsttätig konfigurieren kann. Ferner können auch andere aus dem Stand der Technik bekannte Fahrzeugsensoren als Busteilnehmer vorgesehen sein, wie z. B. Radarsensor, Kamera, Lidarsensor oder dergleichen. Darüber hinaus kann das Verfahren bei allen Arten von "Shared Medium" Bus-Systemen angewendet werden, bei denen die angeschlossenen Busteilnehmer über ihre Position auf dem Bus identifiziert werden sollen, z. B. auch bei Airbag-Sensoren. Alternativ oder zusätzlich könnte als Busteilnehmer auch ein Aktor vorgesehen sein (z. B. bei vernetzten Leuchten oder dergleichen).

Zweckmäßigerweise können die Busteilnehmer jeweils festlegbare unterschiedliche Leitungslängen aufweisen. Dadurch kann die Positionserkennung in besonders einfacher Weise erfolgen. Alternativ können diese anhand (relativer) abschätzbarer Leitungslängen bestimmt oder über eine gemessene Signalstärke geschätzt werden. Die Leitungslängen müssen hierbei nicht absolut bestimmt werden, da das Verfahren auch anhand von relativen Leitungslängen durchgeführt werden kann (z. B. Sensor 1 hat die größte Leitungslänge, Sensor 2 die zweitgrößte Leitungslänge usw.).

Zweckmäßigerweise kann die Steuereinrichtung ein Signal aussenden, welches beim jeweiligen Busteilnehmer das Aussenden eines Antwortsignals auslöst. Vorzugsweise kann dann nach dem Empfang des Signals durch den Busteilnehmer eine Verzögerung vorgesehen sein, bevor der Busteilnehmer der Steuervorrichtung antwortet. Alternativ oder zusätzlich kann auch nach dem Empfang der Antwort durch die Steuervorrichtung eine Verzögerung vorgesehen sein, bevor die Steuervorrichtung erneut ein Signal bzw. einen Impuls an den Busteilnehmer sendet.

Ferner werden zur Positionserkennung eines Busteilnehmers mehrere Messzyklen nacheinander durchgeführt, wobei deren Gesamtdauer bestimmt wird.

Die Gesamtdauer der Messzyklen wird anschließend im Verhältnis zur Leitungslänge gesetzt, sodass dieses Verhältnis zur Positionserkennung herangezogen wird. Durch dieses Aufsummieren der Messzyklen wird erreicht, dass eine zur Messung ausreichend große zeitliche Messgröße erzeugt wird.

In vorteilhafter Weise kann der Messzyklus dabei mehr als 10000 Mal, vorzugsweise mehr als 100000 Mal, besonders vorzugsweise mehr als 1000000 Mal wiederholt werden, um eine ausreichend große zeitliche Messgröße zu erzeugen.

Zweckmäßigerweise kann das Verhältnis von Laufzeit und Leitungslänge abgeleitet werden, indem die Laufzeiten und/oder die Gesamtdauern der Messzyklen für die jeweiligen Busteilnehmer verglichen bzw. in Relation zueinander gesetzt und ihren Größen nach entsprechend den jeweiligen Leitungslängen zugeordnet werden.

In vorteilhafter Weise kann der Busteilnehmer, dessen Position erkannt werden soll, in einen Messzustand (z. B. Einrichtung zum Buszugriff wird eingeschaltet) versetzt werden, während die übrigen Busteilnehmer in einen neutralen Zustand versetzt werden (z. B. Einrichtung zum Buszugriff wird abgeschaltet).

Ferner kann die Steuervorrichtung eine Messeinrichtung umfassen, welche die Zeitdauer und/oder die Signale (Signalanzahl, Signalstärke, Signalart und dergleichen) erfassen kann.

Ferner wird neben- oder untergeordnet ein Verfahren zur Positionserkennung eines Busteilnehmers beansprucht, welches folgende Verfahrensschritte umfasst:
- Senden eines Signals durch die Steuervorrichtung an den Busteilnehmer dessen Position erkannt werden soll,
- Empfangen einer Antwort des jeweiligen Busteilnehmers,
- Erfassen der Antwort beim Eintreffen der Antwort und/oder Erfassen der Zeitdauer zwischen Senden und Empfangen des Signals,
- Warten für eine definierte Zeit, sowie
- Auslesen des Zählerstandes und/oder der Zeitmesseinrichtung aus der Messeinrichtung.

Vorzugsweise umfasst das Verfahren ferner die Verfahrensschritte Applizieren eines vom Busteilnehmer ausgelesenen Korrekturfaktors (zur Korrektur der Laufzeiten der Impulse/Signale zwischen Steuervorrichtung und Busteilnehmer aufgrund von Störungen oder Verlusten), sowie Speichern bzw. Hinterlegen des Ergebnisses z. B. auf einem Speicher der Steuervorrichtung zur späteren Auswertung.

Zweckmäßigerweise können die Verfahrensschritte für eine bestimmte Gesamtdauer und/oder für eine festlegbare Anzahl pro zu bestimmender Position bzw. pro Busteilnehmer wiederholt werden.

Gemäß einer bevorzugten Ausgestaltung des Verfahrens werden die Verfahrensschritte für jeden Busteilnehmer des Bussystems durchgeführt.

Insbesondere kann es sich bei den erfindungsgemäßen Verfahren auch um ein computerimplementiertes Verfahren handeln, wobei unter "computerimplementiertes Verfahren" im Sinne der Erfindung eine Ablaufplanung oder Vorgehensweise verstanden wird, welche anhand eines Rechners verwirklicht bzw. durchgeführt wird. Der Rechner, wie z. B. ein Computer, ein Computernetzwerk, ein Steuergerät bzw. eine Steuervorrichtung, ein Mikrocontroller oder Mikroprozessor oder eine andere aus dem Stand der Technik bekannte programmierbare Steuervorrichtung, kann dabei mittels programmierbarer Rechenvorschriften Daten verarbeiten. In Bezug auf das Verfahren können dabei wesentliche Eigenschaften z. B. durch ein neues Programm, neue Programme, einen Algorithmus oder dergleichen bewirkt werden.

Neben- oder untergeordnet beansprucht die vorliegende Erfindung ein Bussystem mit Positionserkennung von Busteilnehmern, der Einbauposition insbesondere anhand eines erfindungsgemäßen Verfahrens erkannt wird. Das Bussystem umfasst hierzu eine Steuervorrichtung sowie mehrere Busteilnehmer, die jeweils an der zu erkennenden Position angeordnet sind. Die Busteilnehmer sind dabei über mindestens eine Leitung mit der Steuervorrichtung verbunden, wobei die Leitung zu dem jeweiligen Busteilnehmer eine festlegbare Leitungslänge aufweist und die Positionserkennung des Busteilnehmers erfolgt, indem die Steuervorrichtung innerhalb eines Messzyklus einen Impuls über die Leitung an den jeweiligen Busteilnehmer sendet und der entsprechende Busteilnehmer antwortet. In praktischer Weise kann dies dadurch erfolgen, dass der Busteilnehmer über eine bestimmte Adresse vorkonfiguriert wird. Ferner ermittelt die Steuervorrichtung die Dauer des Messzyklus bzw. Messzyklusdauer, wobei das Verhältnis von Messzyklusdauer und Leitungslänge zur Positionserkennung herangezogen wird.

### Beschreibung der Erfindung anhand von Ausführungsbeispielen

Im Folgenden wird die Erfindung anhand von zweckmäßigen Ausführungsbeispielen näher erläutert. Es zeigen:
- Fig. 1: eine vereinfachte schematische Darstellung eines Übersichtsplan eines Bussystems, bei dem die Einbaupositionen der jeweiligen Busteilnehmer über das erfindungsgemäße Verfahren automatisch erkannt werden;
- Fig. 2: eine vereinfachte schematische Darstellung der Zuordnung einer Sensoradresse innerhalb des Bussystems;
- Fig. 3: eine vereinfachte schematische Darstellung des Messprinzips nach dem erfindungsgemäßen Verfahren;
- Fig. 4: eine vereinfachte schematische Darstellung einer ersten Ausgestaltung einer Steuervorrichtung und eines Busteilnehmers, dessen Einbauposition automatisch mittels des erfindungsgemäßen Verfahrens erkannt wird;
- Fig. 5: eine vereinfachte schematische Darstellung eines steuergeräteseitigen Implementierungsbeispiels des erfindungsgemäßen Verfahrens;
- Fig. 6: eine vereinfachte schematische Darstellung eines busteilnehmerseitigen Implementierungsbeispiels des erfindungsgemäßen Verfahrens, sowie
- Fig. 7: eine vereinfachte schematische Darstellung einer Ausgestaltung einer Messeinrichtung, die das erfindungsgemäße Verfahren ausführt.

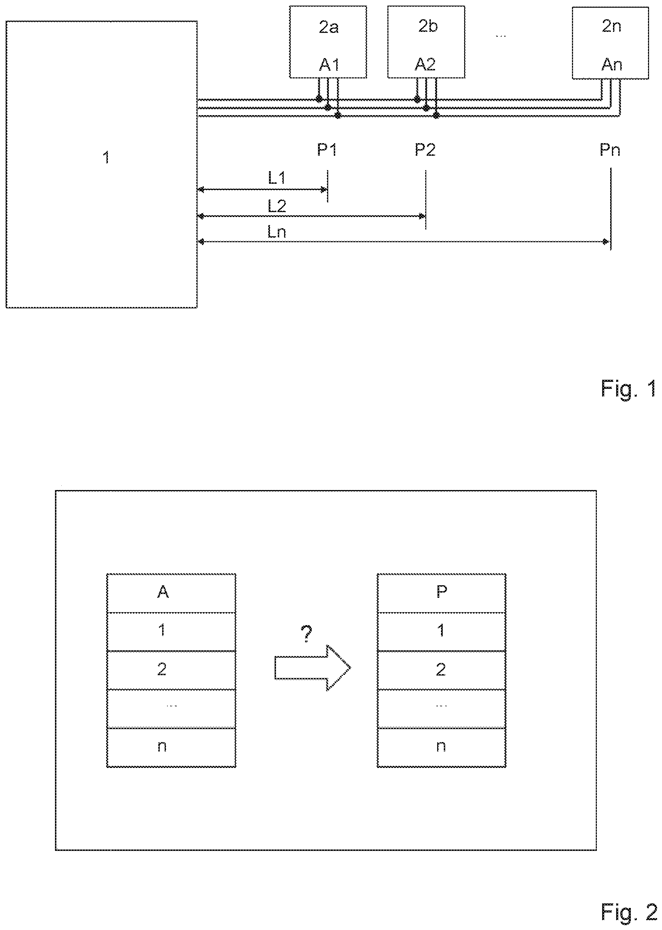

In Fig. 1 ist ein Übersichtsplan einer Anschlussschaltung bzw. eine Bussystem dargestellt, bei dem an einem gemeinsamen Versorgungs- und Kommunikationsbus einer Steuervorrichtung 1 ("shared medium") mehrere Busteilnehmer 2a, 2b ... 2n, z. B. Ultraschall-Abstandssensoren, angeschlossen werden. Die Busteilnehmer 2a, 2b, 2n sind dabei an einer bestimmten Einbauposition P1, P2, Pn angeordnet und weisen jeweils eine unterschiedliche Leitungslänge L1, L2, Ln zur Steuervorrichtung 1 auf. Beispielsweise können der Bus bzw. die Leitungen drei-drahtig ausgestaltet sein (Versorgungsspannung, Kommunikationssignal und Masse), sodass auch die Busteilnehmer bzw. (Ultraschall-Abstands-) Sensoren ebenso nur drei Anschlusspins aufweisen. Zudem werden den Busteilnehmern eindeutige Adressen A1, A2, An (z. B. Seriennummern oder dergleichen) zugewiesen, über die sie einzeln ansprechbar sind. Zur Auswertung der Sensorsignale ist steuergeräteseitig die Kenntnis über die mechanische Einbauposition des jeweiligen Sensors notwendig, z. B. vorne links, vorne rechts und dergleichen. Hierzu muss in der Steuergeräte-Software eine Zuordnung der Sensoradresse zur (a-priori nicht bekannten) tatsächlichen Position durchgeführt werden, wie in Fig. 2 vereinfacht dargestellt.

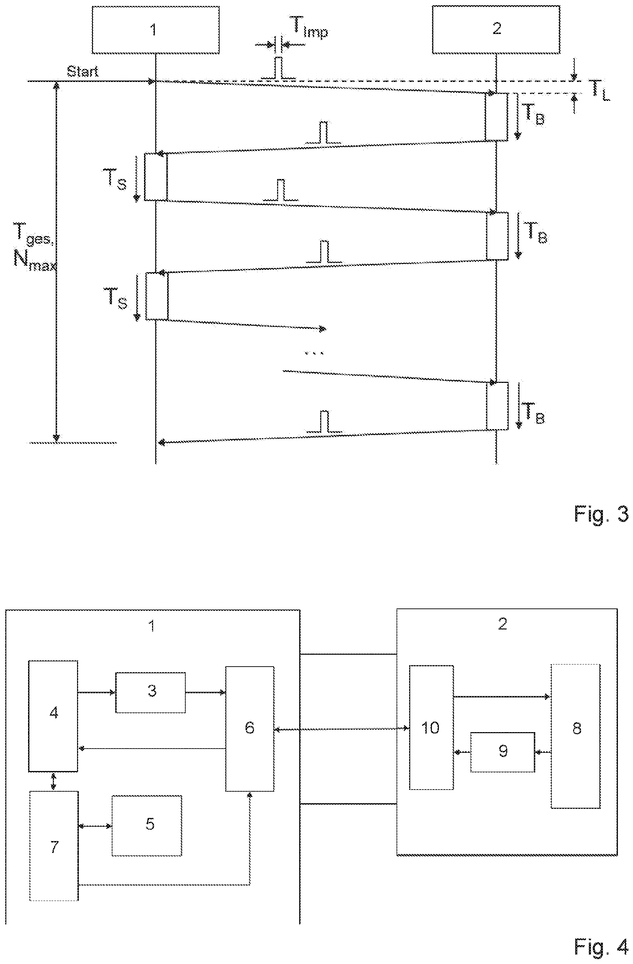

Eine Ausgestaltung des Verfahrensablaufs zur Bestimmung der jeweiligen Einbauposition (Messprinzip) ist in Fig. 3 dargestellt und beruht darauf, dass von der Steuervorrichtung 1 ein kurzer Impuls (z. B. T_{Imp} < ca. 1usec Dauer) ausgesendet wird, der über die Signalleitung des Busses nach der Laufzeit T_{L} von dem Busteilnehmer 2 empfangen wird, dessen Einbauposition ermittelt werden soll. Dadurch kann nach definierter, über die Messdauer hinreichend konstanter Verzögerung T_{B} (mit T_{B} > T_{Imp}) ein entsprechender Antwortimpuls erzeugt werden, welcher wiederum auf der Signalleitung zur Steuervorrichtung 1 zurückgesandt wird. Der Antwortimpuls wird wiederum nach der Laufzeit T_{L} in der Steuervorrichtung 1 empfangen, wodurch nach definierter Verzögerung Tₛ (mit Tₛ > T_{Imp}) ein erneuter Messzyklus ausgelöst wird. Dieser Messzyklus wird anschließend in hoher Anzahl (z. B. 100000- oder 1000000-mal) wiederholt, sodass die für eine direkte Messung vergleichsweise kurze Signallaufzeit T_{L} (ca. 3,5 nsec pro Meter Leitungslänge) zu einer besonders gut messbaren Größe aufsummiert wird, welche in die Gesamtdauer der Messung auswertbar einfließt. Diese Messung wird zudem für alle Busteilnehmer wiederholt, wobei ein abschließender Vergleich der jeweiligen Gesamtdauern die gesuchte Reihung der Busteilnehmer 2a, 2b, 2n auf dem Bus liefert, d. h. die längste Zeitdauer des Messzyklus bzw. Messzyklusdauer entspricht z. B. der längsten Leitungslänge, wobei sich die Zeitdauer eines Messzyklus z. B. durch T_{L}+T_{B}+T_{L}+Tₛ oder T_{L}+T_{B}+T_{L} errechnet.

Fig. 4 zeigt eine erfindungsgemäße Steuervorrichtung 1, die einen Impulsgenerator 3, eine Impulssteuerung 4, eine Messeinrichtung 5, eine Einrichtung zum Buszugriff 6 (Bustransceiver) sowie eine Systemsteuerung 7 umfasst. Der Impulsgenerator 3 ist dabei derart ausgelegt, dass er, jeweils ausgelöst durch einen Triggerimpuls der Systemsteuerung 7, kurze Einzelimpulse liefert (z. B. mit einer Pulsdauer im 100-nsec-Bereich). Ferner erfolgt über den Buszugriff 6 eine Kommunikation mit einem Busteilnehmer 2, der hierzu ebenfalls einen Buszugriff 10 und darüber hinaus einen Impulsgenerator 8 und eine Impulssteuerung 9 aufweist.

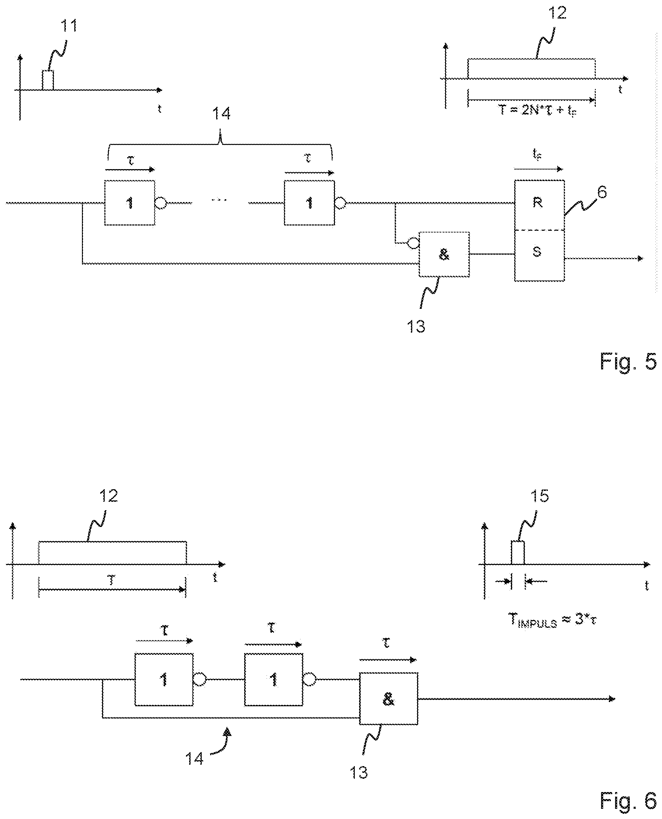

Fig. 5 zeigt eine Beispielimplementierung, bei der die Pulssteuerung derart aufgebaut ist, dass sie durch einen vom Bus empfangenen Impuls ausgelöst wird. Nach dessen Abklingen sowie der gegebenenfalls. notwendigen Umschaltung der Senderichtung des Busses, wird dabei ein Triggerimpuls 11 für den Impulsgenerator 3 auslöst. Ferner ist die hieraus resultierende Verzögerung zwischen dem Eintreffen des Empfangsimpulses und dem Anlegen des Triggerimpulses 11 über die Dauer des gesamten Messvorgangs hinweg konstant. Ferner kann auch ein Zeitglied vorgesehen sein, wie in Fig. 5 gezeigt anhand des UND-Gatters 13 und des Inverter-Gatters 14. Die Einrichtung zum Buszugriff 6 ist dabei als Umschalteinrichtung aufgebaut, weist einen "RS-Flip-Flop" (geschlossene Reihenschaltung mit einer geraden Anzahl an Invertern mit zwei stabilen Zuständen des Ausgangssignals) auf und ermöglicht unter Kontrolle von Steuerung und Impulssteuerung das Anschalten der Messeinrichtung 5 an den Bus und damit die Ausgabe eines Ausgangssignals 12 sowie die Umschaltung von Sende- und Empfangsrichtung (R/S; Receiver/Sender) bei der Messung. Die Messeinrichtung 5 realisiert hierbei die Funktion eines Zählers und Zeitmessers. In Fig. 6 ist der Eingang des Ausgangssignals 12 am Busteilnehmer 2 dargestellt, welcher infolgedessen einen Antwortpuls 15 sendet.

Die Systemteuerung 7 dient zur Konfiguration der Systembestandteile auf Steuervorrichtungsseite und auf Busteilnehmerseite, mittels entsprechender Kommunikation über den Bus. Weiterhin kann die Systemteuerung 7 die Steuerung des Messablaufs und die Auswertung des jeweiligen Ergebnisses durchführen. Die Impulssteuerung 8, der Impulsgenerator 9 und die Einrichtung zum Buszugriff 10 sind entsprechend der Impulssteuerung 4, dem Impulsgenerator 3 und der Einrichtung zum Buszugriff 6 der Steuervorrichtung 1 konfiguriert bzw. aufgebaut. Bei der Einrichtung zum Buszugriff 10 kann ein "Loopback-Modus" (Loopback-Zustand), bei dem für eine festlegbare Zeitdauer ein auf der Leitung empfangener Impuls unmittelbar in einen entsprechenden Impuls in Gegenrichtung umgesetzt wird, realisiert werden. Zudem kann ein "neutraler Zustand" des Busteilnehmers 2 am Bus ermöglicht werden. Der neutrale Zustand des Busteilnehmers 2 soll derart gestaltet sein, dass dieser für eine bestimmte Zeitdauer (in etwa gleicher Größenordnung wie der Loopback-Modus) nicht auf Signale aus dem Bus reagiert, danach jedoch selbsttätig wieder in den "normalen" Betriebszustand zurückkehrt. Die teilnehmerseitige Einrichtung zum Buszugriff 10 kann zudem derart konfiguriert werden, dass die Messeinrichtung 5 auf Befehl der Steuervorrichtung für die Dauer der Messung in einen Messzustand überführt wird, und danach selbsttätig wieder in den "normalen" Betriebszustand zurückkehrt. Der Messzustand ist dabei durch das Aktivieren der Messeinrichtung 5 sowie das Anschalten der Messeinrichtung 5 an den Bus gekennzeichnet.

Für das erfindungsgemäße Verfahren wird zunächst vorausgesetzt, dass die Busteilnehmer 2a, 2b, 2n über eindeutige Adressen (z. B. Seriennummern oder dergleichen) einzeln ansprechbar sind. Die Verfahren zur Adressermittlung sind dabei protokollspezifisch, hinreichend bekannt und sind explizit nicht Gegenstand des vorliegenden Verfahrens. Es wird zudem vorausgesetzt, dass die Busteilnehmer 2a, 2b, 2n gegebenenfalls über einen auslesbaren Korrekturwert verfügen, welcher herstellungsspezifische Schwankungen der jeweiligen Bauteileigenschaften kompensieren kann, die Einfluss auf den Messwert haben. Dieser Wert kann z. B. bei einem Fertigungstest unter definierten Bedingungen ermittelt werden.

Gemäß einer bevorzugten Ausgestaltung des Verfahrensablaufes kann das erfindungsgemäße Verfahren aus Steuervorrichtungssicht zunächst den Busteilnehmer, dessen Position erkannt bzw. ermittelt werden soll, in den Messzustand versetzen bzw. konfigurieren (z. B. Busteilnehmers 2a mit Adresse A1). Dementsprechend werden die anderen Busteilnehmer 2b, 2n in den neutralen Zustand versetzt. Danach kann für eine festlegbare Gesamtauer T_{ges}, oder eine definierte Anzahl an Messsequenzen Nₘₐₓ eine Messsequenz von Messzyklen durch Aussenden eines Impulses vom Impulsgenerator 3 der Steuervorrichtung 1 gestartet werden. Die Steuervorrichtung 1 wartet dann auf eine Antwort bzw. einen Antwortimpuls vom zu messenden Busteilnehmer 2a. Nach erfolgter Antwort kann die Steuervorrichtung 1 den Antwortimpuls über die Messeinrichtung 5 beim Eintreffen des Antwortimpulses zählen oder die Messzyklusdauer erfassen. Ferner kann vorgesehen sein, dass die Steuervorrichtung 1 für eine definierte Zeit Tₛ vor oder nach erfassen der Messzyklusdauer wartet, bis sie einen neuen Impuls bzw. ein neues Signal sendet. Danach kann der Zählerstand und/oder die Zeitmessung ausgelesen werden. Zweckmäßigerweise kann der Busteilnehmer 2a einen Korrekturfaktor bestimmen, den die Steuervorrichtung 1 auslesen und applizieren kann, bevor sie die Ergebnisse zur späteren Auswertung in einem Speicher hinterlegt. Diese Verfahrensschritte können dann für die übrigen bzw. alle bekannten Busteilnehmer wiederholt werden, sodass anschließend eine Zuordnung der gespeicherten Ergebnisse, z. B. in aufsteigender oder absteigender Reihenfolge, erfolgen kann. Die so gefundene Ordnung reflektiert dabei die physische Reihenfolge der Busteilnehmer 2a, 2b... 2n auf dem Bus entsprechend ihrer definierten Leitungslängen L1, L2... Ln, so dass diese in einfacher Weise den entsprechenden Positionen P1, P2... Pn zugeordnet werden können.

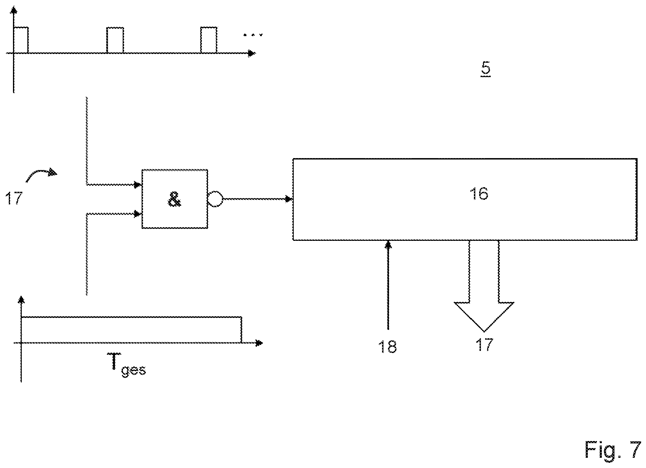

In Fig. 7 ist ein Beispiel für eine Messeinrichtung 5 gezeigt, bei der in einfacher Weise die Messeinrichtung 5 durch eine einfache Zählerschaltung 16 mit hinreichender Breite (z. B. 48 Bit) realisiert werden kann, indem diese über eine Torschaltung 17 mit den empfangenen Impulsen beaufschlagt wird. Über den zweiten Eingang der Torschaltung 17 werden die Pulse für die Dauer der Messung zum Zähler bzw. zur Zählerschaltung 16 hin freigegeben, darüber hinaus gesperrt. Die Zahl der innerhalb der Messdauer gezählten Impulse ist ein Maß für die Impulslaufzeit auf der Leitung und damit deren Länge zum jeweiligen Busteilnehmer 2 und kann über die Ausgabe 18 ausgegeben werden. Da nur die relativen Unterschiede der Messungen untereinander eine Rolle spielen, ist die absolute Dauer der Messung unkritisch; kritisch ist nur deren Wiederholgenauigkeit über mehrere Messungen eines Messzyklus hinweg (in der Regel wenige Sekunden). Dieses Ziel kann jedoch mittels gängiger Timer/Counter-Baugruppen eines steuernden Microcontrollers oder vergleichbaren Zeitgeberschaltungen realisiert werden. Ferner ist ein Reset-Eingang bzw. Reset 19 vorgesehen, mittels dem z. B. eine (automatische) Reset-Funktion bzw. ein Zurücksetzen oder Neustarten der Messeinrichtung 5 bewerkstelligt werden kann.

## Patentansprüche

1. Verfahren zur Positionserkennung eines Busteilnehmers (2, 2a, 2b, 2n) eines Bussystems, bei dem
eine Steuervorrichtung (1) und mehrere Busteilnehmer (2, 2a, 2b, 2n) vorgesehen sind, wobei
die Busteilnehmer (2, 2a, 2b, 2n) jeweils an einer zu erkennenden Position (P1, P2, Pn) angeordnet und
über mindestens eine Leitung mit der Steuervorrichtung (1) verbunden sind, wobei
die Leitung zu dem jeweiligen Busteilnehmer (2, 2a, 2b, 2n) eine festlegbare Leitungslänge (L1, L2, Ln) aufweist, und
die Positionserkennung eines Busteilnehmers (2, 2a, 2b, 2n) erfolgt, indem
innerhalb eines Messzyklus die Steuervorrichtung (1) ein Signal über die Leitung an den jeweiligen Busteilnehmer (2, 2a, 2b, 2n) sendet und der Busteilnehmer (2, 2a, 2b, 2n) antwortet, wobei
die Messzyklusdauer ermittelt wird, und
ein Verhältnis von Messzyklusdauer und Leitungslänge (L1, L2, Ln) zur Positionserkennung herangezogen wird,
**dadurch gekennzeichnet, dass**
zur Positionserkennung eines Busteilnehmers (2, 2a, 2b, 2n) mehrere Messzyklen vorgesehen sind und die Gesamtdauer dieser Messzyklen bestimmt wird, wobei
die Gesamtdauer der Messzyklen im Verhältnis zur Leitungslänge (L1, L2, Ln) gesetzt und zur Positionserkennung herangezogen wird.

2. Verfahren nach Anspruch 1, **dadurch gekennzeichnet, dass** es sich bei dem Busteilnehmer (2, 2a, 2b, 2n) um einen Aktor oder einen Sensor, insbesondere um einen Ultraschallsensor, handelt.

3. Verfahren nach Anspruch 1 oder 2, **dadurch gekennzeichnet, dass** die Busteilnehmer (2, 2a, 2b, 2n) jeweils festlegbare unterschiedliche Leitungslängen (P1, P2, Pn) aufweisen.

4. Verfahren nach mindestens einem der vorhergehenden Ansprüche, **dadurch gekennzeichnet, dass** nach dem Empfang des Signals durch den Busteilnehmer (2, 2a, 2b, 2n) eine Verzögerung (T_{B}) vorgesehen ist, bevor der Busteilnehmer (2, 2a, 2b, 2n) antwortet und/oder nach dem Empfang der Antwort durch die Steuervorrichtung (1) eine Verzögerung (Ts) vorgesehen ist, bevor die Steuervorrichtung (1) ein Signal an den Busteilnehmer (2, 2a, 2b, 2n) sendet.

5. Verfahren nach mindestens einem der vorhergehenden Ansprüche, **dadurch gekennzeichnet, dass** der Messzyklus mehr als 10000 Mal, vorzugsweise mehr als 100000 Mal, besonders vorzugsweise mehr als 1000000 Mal wiederholt wird.

6. Verfahren nach mindestens einem der vorhergehenden Ansprüche, **dadurch gekennzeichnet, dass** das Verhältnis von Laufzeit und Leitungslänge (L1, L2, Ln) erstellt wird, indem die Laufzeiten und/oder Gesamtdauern der Messzyklen der jeweiligen Busteilnehmer (2, 2a, 2b, 2n) verglichen werden und ihrer Größe nach entsprechend den jeweiligen Leitungslängen (L1, L2, Ln) zugeordnet werden.

7. Verfahren nach mindestens einem der vorhergehenden Ansprüche, **dadurch gekennzeichnet, dass** der Busteilnehmer (2a), dessen Position erkannt werden soll, in einen Messzustand versetzt wird, während die übrigen Busteilnehmer (2b, 2n) in einen neutralen Zustand versetzt werden.

8. Verfahren nach mindestens einem der vorhergehenden Ansprüche, **dadurch gekennzeichnet, dass** die Steuervorrichtung (1) eine Messeinrichtung (5) umfasst, welche die Zeitdauer und/oder die Signale erfassen kann.

9. Verfahren zur Positionserkennung eines Busteilnehmers (2, 2a, 2b, 2n) eines Bussystems, nach mindestens einem der vorhergehenden Ansprüche, **dadurch gekennzeichnet, dass** das Verfahren folgende Verfahrensschritte umfasst:
- Senden eines Signals durch die Steuervorrichtung (1) an den Busteilnehmer (2, 2a, 2b, 2n) dessen Position erkannt werden soll,
- Empfangen einer Antwort des jeweiligen Busteilnehmers (2, 2a, 2b, 2n),
- Erfassen der Antwort beim Eintreffen der Antwort und/oder Erfassen der Zeitdauer zwischen Senden und Empfangen des Signals,
- Warten für eine definierte Zeit Ts,
- Auslesen des Zählerstandes und/oder der Zeitmesseinrichtung.

10. Verfahren nach Anspruch 9, **dadurch gekennzeichnet, dass** das Verfahren ferner folgende Verfahrensschritte umfasst:
- Applizieren eines vom Busteilnehmer (2, 2a, 2b, 2n) ausgelesenen Korrekturfaktors, sowie
- Speichern des Ergebnisses zur späteren Auswertung.

11. Verfahren nach Anspruch 9 oder 10, **dadurch gekennzeichnet, dass** die Verfahrensschritte für eine bestimmte Gesamtdauer (T_{ges}) oder für eine festlegbare Anzahl (Nₘₐₓ) wiederholt werden.

12. Verfahren nach einem der Ansprüche 9-11, **dadurch gekennzeichnet, dass** die Verfahrensschritte für alle Busteilnehmer (2, 2a, 2b, 2n) eines Bussystems durchgeführt werden.

13. Bussystem mit Positionserkennung von Busteilnehmern (2, 2a, 2b, 2n), wobei die Positionserkennung insbesondere anhand eines Verfahrens nach einem der vorhergehenden Ansprüche erfolgt, umfassend
eine Steuervorrichtung (1),
mehrere Busteilnehmer (2, 2a, 2b, 2n), die an einer zu erkennenden Position (P1, P2, Pn) angeordnet sind, und
die Busteilnehmer (2, 2a, 2b, 2n) über mindestens eine Leitung mit der Steuervorrichtung (1) verbunden sind, wobei
die Leitung zu dem jeweiligen Busteilnehmer (2, 2a, 2b, 2n) eine festlegbare Leitungslänge (L1, L2, Ln) aufweist, und
die Positionserkennung eines Busteilnehmers (2, 2a, 2b, 2n) erfolgt, indem
die Steuervorrichtung (1) innerhalb eines Messzyklus einen Impuls über die Leitung an den jeweiligen Busteilnehmer (2, 2a, 2b, 2n) sendet und der Busteilnehmer (2, 2a, 2b, 2n) antwortet, wobei
die Steuervorrichtung (1) die Messzyklusdauer ermittelt, und
ein Verhältnis von Messzyklusdauer und Leitungslänge (L1, L2, Ln) zur Positionserkennung herangezogen wird
**dadurch gekennzeichnet, dass**
zur Positionserkennung eines Busteilnehmers (2, 2a, 2b, 2n) mehrere Messzyklen vorgesehen sind und die Gesamtdauer dieser Messzyklen bestimmt wird, wobei
die Gesamtdauer der Messzyklen im Verhältnis zur Leitungslänge (L1, L2, Ln) gesetzt und zur Positionserkennung herangezogen wird.

## Claims

1. Method for detecting the position of a bus subscriber (2, 2a, 2b, 2n) of a bus system, in which
a control device (1) and a plurality of bus subscribers (2, 2a, 2b, 2n) are provided, wherein
the bus subscribers (2, 2a, 2b, 2n) are each arranged at a position (P1, P2, Pn) to be detected and
are connected to the control device (1) via at least one line, wherein
the line to the respective bus subscriber (2, 2a, 2b, 2n) has a definable line length (L1, L2, Ln), and
the position of a bus subscriber (2, 2a, 2b, 2n) is detected by
the control device (1) transmitting a signal to the respective bus subscriber (2, 2a, 2b, 2n) via the line, and the bus subscriber (2, 2a, 2b, 2n) responding, within a measurement cycle, wherein
the measurement cycle duration is determined, and
a ratio of the measurement cycle duration to the line length (L1, L2, Ln) is used to detect the position,
**characterized in that**
in order to detect the position of a bus subscriber (2, 2a, 2b, 2n), a plurality of measurement cycles are provided and the total duration of these measurement cycles is determined, wherein
the total duration of the measurement cycles is related to the line length (L1, L2, Ln) and is used to detect the position.

2. Method according to Claim 1, **characterized in that** the bus subscriber (2, 2a, 2b, 2n) is an actuator or a sensor, in particular an ultrasonic sensor.

3. Method according to Claim 1 or 2, **characterized in that** the bus subscribers (2, 2a, 2b, 2n) each have detefinable different line lengths (P1, P2, Pn).

4. Method according to at least one of the preceding claims, **characterized in that**, after the signal has been received by the bus subscriber (2, 2a, 2b, 2n), a delay (Tb) is provided before the bus subscriber (2, 2a, 2b, 2n) responds and/or, after the response has been received by the control device (1), a delay (Ts) is provided before the control device (1) transmits a signal to the bus subscriber (2, 2a, 2b, 2n).

5. Method according to at least one of the preceding claims, **characterized in that** the measurement cycle is repeated more than 10,000 times, preferably more than 100,000 times, particularly preferably more than 1,000,000 times.

6. Method according to at least one of the preceding claims, **characterized in that** the ratio of running time to line length (L1, L2, Ln) is created by comparing the running times and/or total durations of the measurement cycles of the respective bus subscribers (2, 2a, 2b, 2n) and accordingly assigning them to the respective line lengths (L1, L2, Ln) according to their magnitude.

7. Method according to at least one of the preceding claims, **characterized in that** the bus subscriber (2a) whose position is intended to be detected is changed to a measurement state, while the other bus subscribers (2b, 2n) are changed to a neutral state.

8. Method according to at least one of the preceding claims, **characterized in that** the control device (1) comprises a measurement apparatus (5) which can record the period of time and/or the signals.

9. Method for detecting the position of a bus subscriber (2, 2a, 2b, 2n) of a bus system according to at least one of the preceding claims, **characterized in that** the method comprises the following method steps:
- the control device (1) transmitting a signal to the bus subscriber (2, 2a, 2b, 2n) whose position is intended to be detected,
- receiving a response from the respective bus subscriber (2, 2a, 2b, 2n),
- recording the response when the response arrives and/or recording the period of time between transmission and reception of the signal,
- waiting for a defined time Ts,
- reading the counter reading and/or the time measurement apparatus.

10. Method according to Claim 9, **characterized in that** the method also comprises the following method steps:
- applying a correction factor read from the bus subscriber (2, 2a, 2b, 2n), and
- storing the result for subsequent evaluation.

11. Method according to Claim 9 or 10, **characterized in that** the method steps are repeated for a particular total duration (T_{ges}) or a definable number (Nₘₐₓ).

12. Method according to one of Claims 9-11, **characterized in that** the method steps are carried out for all bus subscribers (2, 2a, 2b, 2n) of a bus system.

13. Bus system with detection of the position of bus subscribers (2, 2a, 2b, 2n), wherein the position is detected, in particular, using a method according to one of the preceding claims, comprising
a control device (1),
a plurality of bus subscribers (2, 2a, 2b, 2n) arranged at a position (P1, P2, Pn) to be detected, and
the bus subscribers (2, 2a, 2b, 2n) are connected to the control device (1) via at least one line, wherein
the line to the respective bus subscriber (2, 2a, 2b, 2n) has a definable line length (L1, L2, Ln), and
the position of a bus subscriber (2, 2a, 2b, 2n) is detected by the control device (1) transmitting a pulse to the respective bus subscriber (2, 2a, 2b, 2n) via the line, and the bus subscriber (2, 2a, 2b, 2n) responding, within a measurement cycle, wherein
the control device (1) determines the measurement cycle duration, and
a ratio of the measurement cycle duration to the line length (L1, L2, Ln) is used to detect the position,
**characterized in that**
in order to detect the position of a bus subscriber (2, 2a, 2b, 2n), a plurality of measurement cycles are provided and the total duration of these measurement cycles is determined, wherein
the total duration of the measurement cycles is related to the line length (L1, L2, Ln) and is used to detect the position.

## Revendications

1. Procédé de reconnaissance de position d'un abonné au bus (2, 2a, 2b, 2n) d'un système de bus, dans lequel
un dispositif de commande (1) et plusieurs abonnés au bus (2, 2a, 2b, 2n) sont prévus, dans lequel
les abonnés au bus (2, 2a, 2b, 2n) sont respectivement disposés à une position à reconnaître (P1, P2, Pn), et
sont reliés au dispositif de commande (1) par au moins une ligne, dans lequel la ligne vers chaque abonné au bus (2, 2a, 2b, 2n) présente une longueur de ligne définissable (L1, L2, Ln), et
la reconnaissance de position d'un abonné au bus (2, 2a, 2b, 2n) est effectuée en ce que
dans un cycle de mesure, le dispositif de commande (1) émet un signal sur la ligne à l'abonné au bus respectif (2, 2a, 2b, 2n), et l'abonné au bus (2, 2a, 2b, 2n) répond, dans lequel
la durée de cycle de mesure est établie, et
un rapport entre la durée de cycle de mesure et la longueur de ligne (L1, L2, Ln) est utilisé pour la reconnaissance de position,
**caractérisé en ce que**
plusieurs cycles de mesure sont prévus pour la reconnaissance de position d'un abonné au bus (2, 2a, 2b, 2n), et la durée totale de ces cycles de mesure est déterminée, dans lequel
la durée totale des cycles de mesure est mise en rapport avec la longueur de ligne (L1, L2, Ln) et est utilisée pour la reconnaissance de position.

2. Procédé selon la revendication 1, **caractérisé en ce que** l'abonné au bus (2, 2a, 2b, 2n) est un actionneur ou un capteur, en particulier un capteur à ultrasons.

3. Procédé selon la revendication 1 ou 2, **caractérisé en ce que** les abonnés au bus (2, 2a, 2b, 2n) présentent respectivement différentes longueurs de ligne définissables (P1, P2, Pn).

4. Procédé selon au moins l'une des revendications précédentes, **caractérisé en ce qu'**après la réception du signal par l'abonné au bus (2, 2a, 2b, 2n), un retard (T_{B}) est prévu avant que l'abonné au bus (2, 2a, 2b, 2n) ne réponde, et/ou **en ce qu'**après la réception de la réponse par le dispositif de commande (1), un retard (Ts) est prévu avant que le dispositif de commande (1) n'émette un signal à l'abonné au bus (2, 2a, 2b, 2n).

5. Procédé selon au moins l'une des revendications précédentes, **caractérisé en ce que** le cycle de mesure est répété plus de 10 000 fois, de préférence plus de 100 000 fois, de manière particulièrement préférée plus de 1 000 000 fois.

6. Procédé selon au moins l'une des revendications précédentes, **caractérisé en ce que** le rapport entre le temps de propagation et la longueur de ligne (L1, L2, Ln) est établi **en ce que** les temps de propagation et/ou les durées totales des cycles de mesure des abonnés au bus respectifs (2, 2a, 2b, 2n) sont comparés et sont associés aux longueurs de ligne respectives (L1, L2, Ln) en fonction de leur grandeur.

7. Procédé selon au moins l'une des revendications précédentes, **caractérisé en ce que** l'abonné au bus (2a) dont la position est à reconnaître est mis dans un état de mesure alors que les autres abonnés au bus (2b, 2n) sont mis dans un état neutre.

8. Procédé selon au moins l'une des revendications précédentes, **caractérisé en ce que** le dispositif de commande (1) comprend un dispositif de mesure (5) qui peut détecter la durée et/ou les signaux.

9. Procédé de reconnaissance de position d'un abonné au bus (2, 2a, 2b, 2n) d'un système de bus selon au moins l'une des revendications précédentes, **caractérisé en ce que** le procédé comprend les étapes de procédé suivantes consistant à :
- émettre un signal par le dispositif de commande (1) à l'abonné au bus (2, 2a, 2b, 2n) dont la position est à reconnaître,
- recevoir une réponse de l'abonné au bus respectif (2, 2a, 2b, 2n),
- détecter la réponse à l'arrivée de la réponse et/ou détecter la durée entre l'émission et la réception du signal,
- attendre pendant un temps défini Ts,
- relever la position de compteur et/ou l'équipement de mesure de temps.

10. Procédé selon la revendication 9, **caractérisé en ce que** le procédé comprend en outre les étapes de procédé suivantes consistant à :
- appliquer un facteur de correction relevé par l'abonné au bus (2, 2a, 2b, 2n), et
- mémoriser le résultat en vue d'une évaluation ultérieure.

11. Procédé selon la revendication 9 ou 10, **caractérisé en ce que** les étapes de procédé sont répétées pendant la durée totale déterminée (T_{ges}) ou pour un nombre définissable (Nₘₐₓ).

12. Procédé selon l'une quelconque des revendications 9 à 11, **caractérisé en ce que** les étapes de procédé sont exécutées pour tous les abonnés au bus (2, 2a, 2b, 2n) d'un système de bus.

13. Système de bus à reconnaissance de position des abonnés au bus (2, 2a, 2b, 2n), dans lequel la reconnaissance de position est effectuée en particulier à l'aide d'un procédé selon l'une quelconque des revendications précédentes, comprenant
un dispositif de commande (1),
plusieurs abonnés au bus (2, 2a, 2b, 2n) qui sont respectivement disposés à une position à reconnaître (P1, P2, Pn), et
les abonnés au bus (2, 2a, 2b, 2n) sont reliés au dispositif de commande (1) par au moins une ligne, dans lequel
la ligne vers chaque abonné au bus (2, 2a, 2b, 2n) présente une longueur de ligne définissable (L1, L2, Ln), et
la reconnaissance de position d'un abonné au bus (2, 2a, 2b, 2n) est effectuée en ce que
le dispositif de commande (1) émet dans un cycle de mesure une impulsion par la ligne à l'abonné au bus respectif (2, 2a, 2b, 2n), et l'abonné au bus (2, 2a, 2b, 2n) répond, dans lequel
le dispositif de commande (1) établit la durée de cycle de mesure, et
un rapport entre la durée de cycle de mesure et la longueur de ligne (L1, L2, Ln) est utilisé pour la reconnaissance de position,
**caractérisé en ce que**
plusieurs cycles de mesure sont prévus pour la reconnaissance de position d'un abonné au bus (2, 2a, 2b, 2n), et la durée totale de ces cycles de mesure est déterminée, dans lequel
la durée totale des cycles de mesure est mise en rapport avec la longueur de ligne (L1, L2, Ln) et est utilisée pour la reconnaissance de position.
